# FASCICULE DE BREVET EUROPEEN

(11) **EP 2 821 280 B1**
(45) Date de publication et mention de la délivrance du brevet: **20.02.2019**
(21) Numéro de dépôt: 14172969.9
(22) Date de dépôt: 18.06.2014
(51) Int. Cl.: B60P 1/28, B60P 1/64, B65D 90/00

(54) **Conteneur amovible pour véhicule**
Herausnehmbarer Behälter für Fahrzeug
Removable container for vehicle

(30) Priorité: 03.07.2013 BE 201300467
(43) Date de publication de la demande: 07.01.2015
(73) Titulaire: R.C. S.A., 4040 Herstal (BE)
(72) Inventeur: Tilkin, Olivier, 4670 Blegny (BE)
(74) Mandataire: De Groote, Christophe

(56) Documents cités:
- WO-A1-2006/058904
- WO-A1-2006/133489
- DE-A1- 19 839 039
- FR-A- 1 192 083
- FR-A1- 2 679 894
- US-A- 5 624 143

## Description

### Domaine de l'invention

L'invention se rapporte au domaine des conteneurs amovibles montés sur des véhicules. Plus particulièrement, l'invention concerne un conteneur amovible comprenant un dispositif de désolidarisation et de dégagement dudit conteneur par rapport à un véhicule sur lequel il est monté. L'invention se rapport également à un véhicule comprenant ledit conteneur.

L'invention se rapporte aussi à une méthode pour désolidariser et dégager un conteneur d'un véhicule et à une méthode pour monter un conteneur sur un véhicule, lesdites méthodes comprenant l'utilisation d'un conteneur selon l'invention.

### État de la technique

Afin de transporter divers matériaux, il est fréquent d'utiliser des conteneurs montés sur des véhicules, généralement des camions, voire des camionnettes. De tels conteneurs peuvent par exemple être une benne. En fonction des besoins des utilisateurs du conteneur et/ou du véhicule, il peut être avantageux de pouvoir séparer le conteneur du véhicule, afin d'utiliser le conteneur en un lieu déterminé sans y immobiliser le véhicule transportant le conteneur et/ou afin de pouvoir utiliser à d'autres fins le véhicule ainsi libéré du conteneur. Ce type de conteneur est parfois aussi appelé « conteneur amovible ».

Des conteneurs amovibles associés à des dispositifs pour démonter le conteneur d'un véhicule sont connus. Par exemple, dans le document EP1896292, un camion comprenant une benne et un dispositif de démontage de la benne est décrit. Le dispositif de démontage de la benne est lié au châssis du camion et permet de désolidariser la benne du camion et de la déposer en un lieu déterminé, permettant au camion de pouvoir effectuer d'autres opérations pendant que la benne reste sur le lieu de son dépôt.

Cependant, un tel dispositif reste présent sur le camion après la dépose de la benne. Ces dispositifs étant généralement relativement lourds, il en résulte une perte en poids utile que peut transporter le véhicule, lorsque ce dernier effectue d'autres opérations. De plus, la présence du dispositif sur le véhicule entraine une consommation de carburant accrue.

Des mécanismes pour désolidariser un conteneur d'un véhicule et restant à demeure sur le conteneur sont également connus. Par exemple, dans le document DE19839039, un tel mécanisme est monté sur le conteneur ou sur une plateforme supportant le conteneur. Cependant, ce mécanisme doit être présent en au moins deux exemplaires, montés latéralement de part et d'autre du conteneur, ce qui augmente le coût et l'encombrement du dispositif. Il nécessite par exemple au moins deux vérins. De plus, lorsque ce mécanisme est actionné, il déborde le long des faces latérales du conteneur, ce qui peut être gênant, voire dangereux.

### Résumé de l'invention

Un des buts de la présente invention est donc de fournir un conteneur amovible comprenant un dispositif de désolidarisation et de dégagement qui reste solidaire du conteneur lorsque ledit conteneur est déposé au sol et qui est plus simple et/ou plus sur et/ou moins encombrant que les dispositifs existants.

L'invention est définie par les revendications indépendantes. Les revendications dépendantes définissent des modes de réalisation préférés de l'invention.

Selon l'invention, il est fourni un conteneur apte à être monté de façon amovible sur un véhicule, ledit conteneur comprenant un dispositif de désolidarisation et de dégagement dudit conteneur par rapport audit véhicule, ledit dispositif de désolidarisation et de dégagement comprenant un vérin présentant au moins une première partie et une seconde partie aptes à se déplacer en force l'une par rapport à l'autre, la première partie dudit vérin étant reliée de manière pivotante audit conteneur par un premier pivot.
Ledit dispositif de désolidarisation et de dégagement comprend en outre :
- une pièce de liaison,
- un deuxième pivot apte à relier la pièce de liaison de manière pivotante au conteneur,
- un troisième pivot apte à relier la pièce de liaison de manière pivotante à la deuxième partie du vérin,
- au moins une première béquille apte à supporter ladite pièce de liaison en une position située antérieurement au deuxième pivot.
Le premier pivot est en une position située à l'extérieur du conteneur et sur une surface avant dudit conteneur.
De manière préférentielle, le second pivot est en une position située à l'extérieur du conteneur et sur une face inférieure dudit conteneur.

Grâce à ce dispositif, il est possible de soulever le conteneur en activant le vérin. En reliant ensuite le conteneur et la deuxième partie du vérin par la pièce de liaison via respectivement le deuxième et le troisième pivot, la pièce de liaison forme un bras de levier articulé qui, une fois soutenu par rapport au sol par l'au moins une béquille, fera se rétracter le vérin sous le poids du conteneur lorsque la pression dans le vérin est relâchée. Le conteneur sera ainsi désolidarisé et dégagé du véhicule et ce dernier pourra s'en aller sans devoir transporter ni le conteneur ni le dispositif.

De préférence, le dispositif de désolidarisation et de dégagement comporte en outre des premiers moyens de liaison amovibles entre ladite pièce de liaison et/ou la seconde partie du vérin d'une part et le véhicule d'autre part. Ainsi, le dispositif de désolidarisation et de dégagement est également apte à basculer le conteneur, ce qui permet d'en décharger le contenu par gravité, sans pour autant désolidariser et dégager le conteneur du véhicule sur lequel est monté le conteneur. Il est en effet avantageux que le dispositif de désolidarisation et de dégagement du conteneur permette également le déchargement du contenu, assurant une plus grande variété d'utilisation du conteneur, ce dernier pouvant alors servir soit pour le déchargement du contenu, soit pour un stockage du contenu sans immobiliser le véhicule.

L'invention concerne également une méthode pour désolidariser et dégager un conteneur d'un véhicule, comprenant les étapes de :
a) Fourniture d'un véhicule sur lequel est monté un conteneur selon l'invention,
b) Activation du vérin,
c) Désactivation du vérin,
d) Placement de l'au moins une première béquille en une position de soutien de la pièce de liaison en une position antérieure au second pivot,
e) Libération de la pression du vérin.

Grâce à cette méthode, il est aisé de déposer un conteneur sur un lieu de stockage, sans conserver le dispositif de désolidarisation et de dégagement sur le véhicule après le dépôt du conteneur.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :

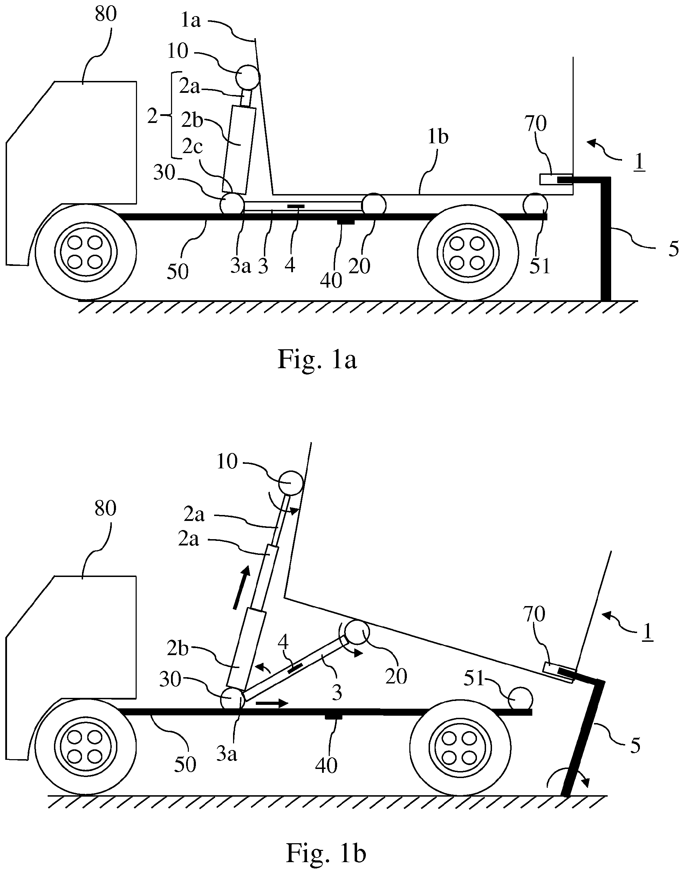

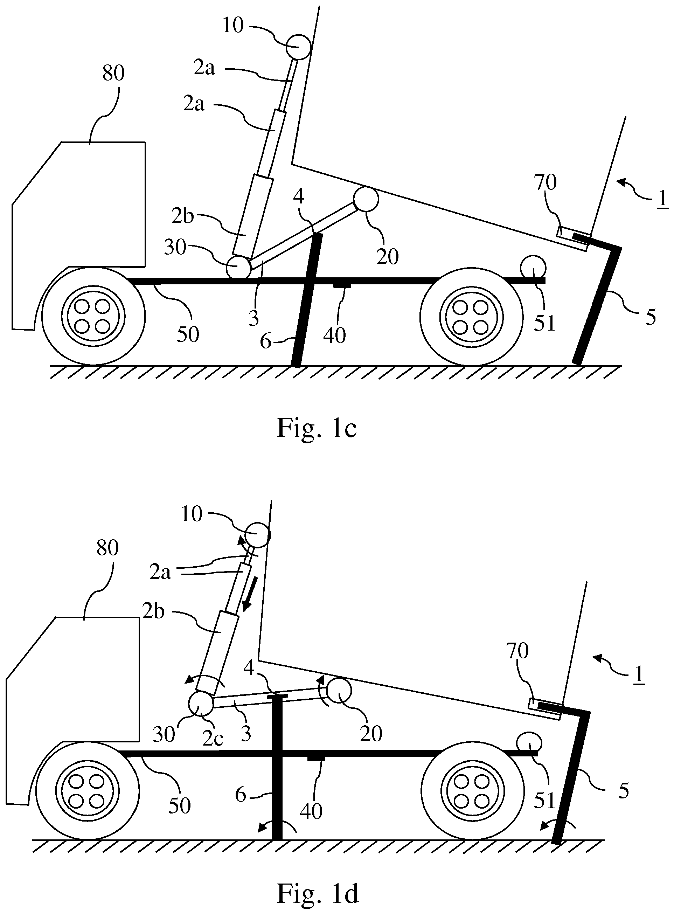

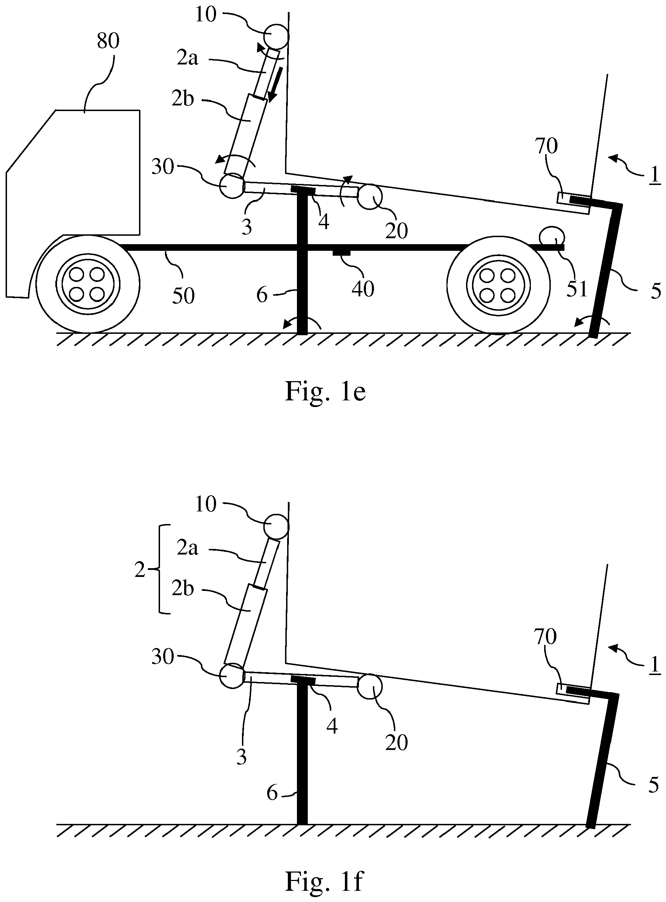

Figs. 1a, 1b, 1c, 1d, 1e, et 1f montrent schématiquement des vues latérales d'un conteneur selon l'invention dans différentes phases de désolidarisation et de dégagement du conteneur par rapport à un véhicule.
   La Fig. 1a représente le conteneur avant activation du vérin ;
   La Fig. 1b représente le conteneur après activation du vérin ;
   La Fig. 1c représente le conteneur après placement d'au moins une première béquille en soutien d'une pièce de liaison ;
   La Fig. 1d représente le conteneur après la libération de la pression dans le vérin ;
   La Fig. 1e représente le conteneur après la rétraction du vérin et la stabilisation du conteneur sur l'au moins une première béquille ;
   La Fig. 1f représente le conteneur tel que déposé après le départ du véhicule.
Figs.2a et 2b montrent schématiquement des vues latérales d'un conteneur préféré selon l'invention lorsque le dispositif de désolidarisation et de dégagement est utilisé pour soulever le conteneur afin d'en vider le contenu.

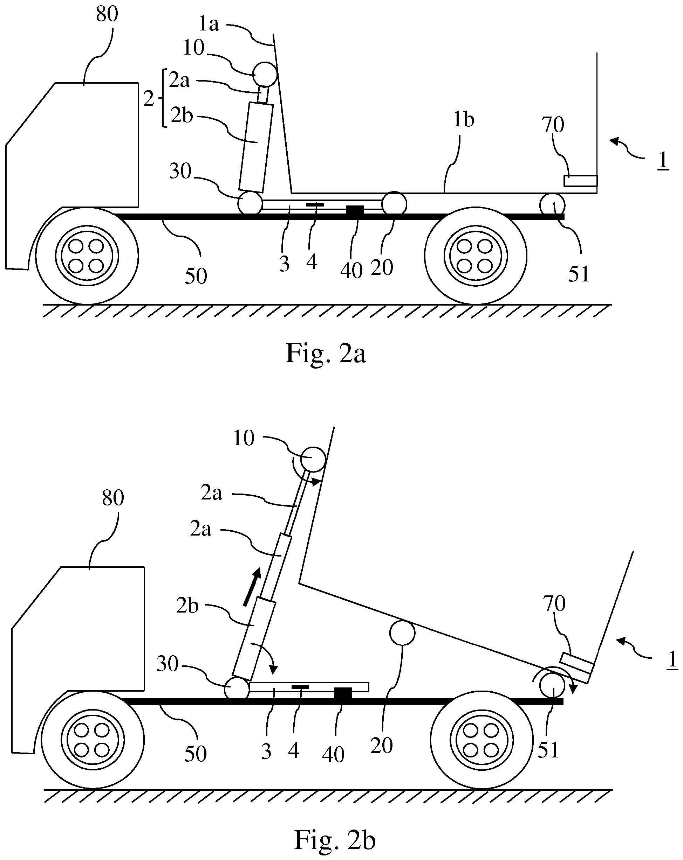

   La Fig. 2a représente le conteneur avant l'activation du vérin ;
   La Fig. 2b représente le conteneur après activation du vérin.

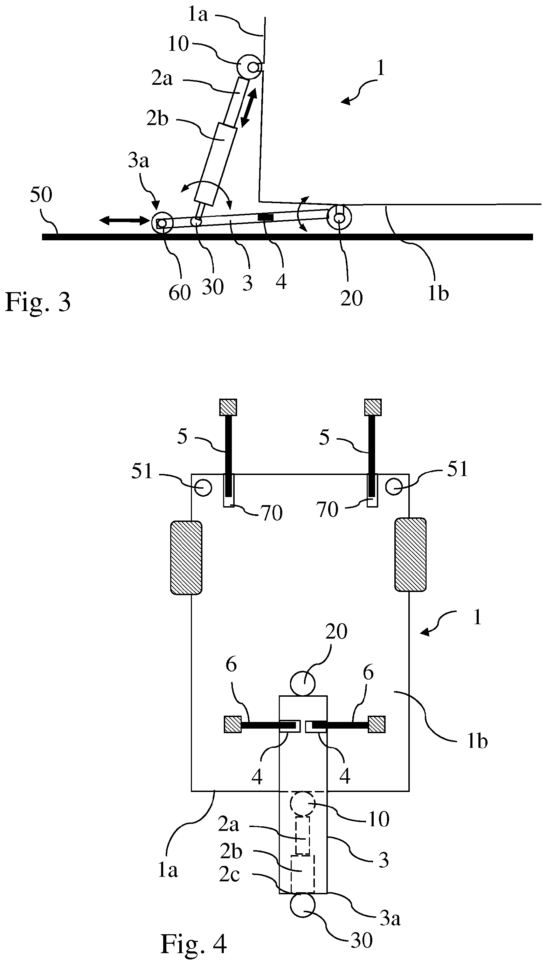

Fig. 3 montre schématiquement une vue latérale partielle d'un mode de réalisation particulier de l'invention.
Fig.4 montre schématiquement une vue du dessous d'un mode de réalisation de l'invention.

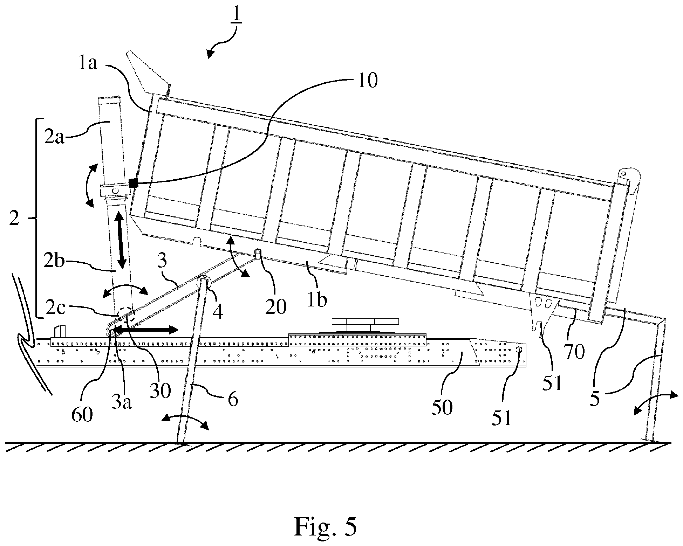

Fig. 5 montre schématiquement une vue latérale d'un conteneur selon un mode de réalisation particulier de l'invention.

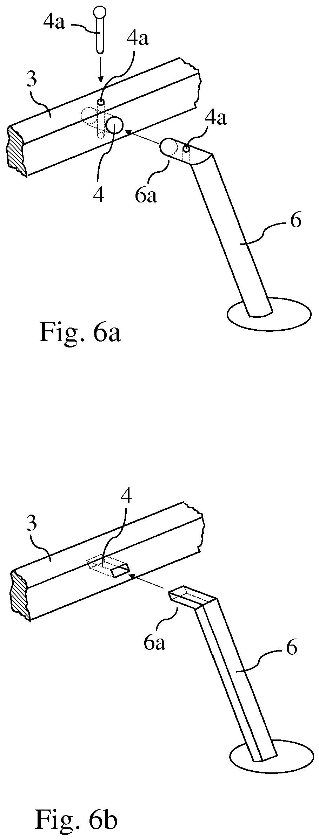

Fig. 6a montre schématiquement un exemple d'une partie d'une pièce de liaison, d'une première béquille, et d'un premier moyen de liaison entre ces deux parties.
Fig. 6b montre schématiquement un autre exemple d'une partie d'une pièce de liaison, d'une première béquille, et d'un premier moyen de liaison entre ces deux parties.

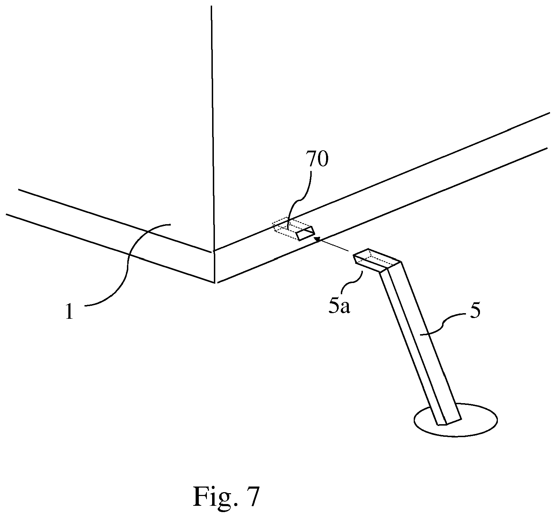

Fig. 7 montre schématiquement un exemple d'une partie arrière d'un conteneur, d'une seconde béquille et d'un second moyen de liaison entre ces deux parties.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de modes de réalisation particuliers

Les Figs. 1a, 1b, 1c, 1d, 1e, et 1f représentent tout d'abord de manière générale et schématique un conteneur (1) selon l'invention monté de façon amovible sur un véhicule et respectivement à différentes étapes de sa désolidarisation et de son dégagement du véhicule. La Fig. 4 présente le même conteneur selon une vue du dessous.

Le conteneur (1) peut par exemple être une benne, un plateau de transport, une bétonnière ou une citerne. Le conteneur peut présenter une surface avant (1a) et une surface inférieure (1b). A titre d'exemple, la surface avant (1a) est une surface faisant face à une cabine de pilotage (80) du véhicule lorsque le conteneur (1) est monté sur le véhicule et la surface inférieure (1b) est une surface faisant face à un châssis (50) du véhicule lorsque le conteneur (1) est monté sur le véhicule. Par apte à être monté de façon amovible sur un véhicule, il faut comprendre que le conteneur (1) peut à loisir être monté sur le véhicule ou déposé du véhicule. Il s'entend que ledit véhicule comporte, indépendamment du conteneur (1), des moyens pour porter ledit conteneur (1). De tels moyens sont bien connus de l'état de la technique et ne seront donc pas décrits plus en détail.

Le conteneur (1) comprend un dispositif de désolidarisation et de dégagement dudit conteneur (1) par rapport audit véhicule. Par désolidarisation et dégagement, il faut comprendre que le dispositif de désolidarisation et de dégagement est apte à séparer totalement un véhicule du conteneur (1) comprenant le dispositif, de sorte que, après désolidarisation et dégagement, le véhicule n'est ni en contact avec le dispositif de désolidarisation et de dégagement, ni en contact avec le conteneur (1).

Le dispositif de désolidarisation et de dégagement comporte un vérin (2) qui est par exemple un vérin classique comprenant au moins une première partie (2a) et une seconde partie (2b) aptes à se déplacer en force l'une par rapport à l'autre, par exemple sous l'effet d'un fluide envoyé sous pression dans une ou plusieurs chambres de pression. De façon préférentielle, le vérin (2) est un vérin à simple effet. De façon alternative ou complémentaire, le vérin (2) est un vérin télescopique. Selon un vérin (2) classique, la première partie (2a) comporte par exemple le cylindre du vérin (2) et la deuxième partie (2b) comporte par exemple une tige reliée au piston du vérin, ou vice-versa. Le vérin peut être alimenté en pression de manière connue, par exemple par un compresseur présent soit sur le véhicule soit sur le conteneur (1).

La première partie (2a) du vérin (2) est reliée de manière pivotante au conteneur (1) par un premier pivot (10). Par « pivotante », il faut comprendre que la première partie du vérin (2a) et le conteneur (1) ainsi reliés sont aptes à se déplacer en rotation l'un par rapport à l'autre autour d'un axe du premier pivot (10). Un tel premier pivot (10) peut par exemple comporter une double oreille fixée sur le conteneur (1) et un anneau fixé sur la première partie du vérin (2a), la double oreille et l'anneau étant reliés ensemble de manière pivotante par une tige ou un barreau les traversant. Le premier pivot (10) est en une position située à l'extérieur du conteneur (1) et sur une surface avant (1a) dudit conteneur (1).

Le dispositif de désolidarisation et de dégagement comprend en outre une pièce de liaison (3), un deuxième pivot (20) apte à relier la pièce de liaison (3) de manière pivotante au conteneur (1), un troisième pivot (30) apte à relier la pièce de liaison (3) de manière pivotante à la seconde partie (2b) du vérin, et au moins une première béquille (6) apte à supporter la pièce de liaison (3) en une position située antérieurement au deuxième pivot (20).

Dans le cadre de la présente invention, il faut comprendre par « antérieurement » que, lorsque le conteneur (1) est monté sur un véhicule, la position définie est vers l'avant du véhicule, généralement vers la cabine de pilotage (80), par rapport à un plan vertical comprenant la position de référence. Par « postérieurement », il faut comprendre que, lorsque le conteneur (1) est monté sur un véhicule, la position définie est vers l'arrière du véhicule par rapport à un plan vertical comprenant la position de référence.

Ainsi, dans le cas présent, la première béquille (6) est conçue pour être apte à supporter la pièce de liaison en une position située vers l'avant du véhicule par rapport à un plan vertical comprenant le second pivot (20).

La pièce de liaison (3) peut par exemple avoir la forme d'une plaque, d'une poutre ou d'un barreau, de préférence en un matériau métallique tel que l'acier par exemple.

Le deuxième pivot (20) est apte à relier la pièce de liaison (3) de manière pivotante au conteneur (1), de sorte que la pièce de liaison (3) et le conteneur (1) sont aptes à se déplacer en rotation l'un par rapport à l'autre autour d'un axe du second pivot (20). Le second pivot (20) peut par exemple comporter une double oreille fixée sur le conteneur (1) et un anneau fixé sur la pièce de liaison (3), la double oreille et l'anneau étant reliés ensemble de manière pivotante par une tige les traversant. De façon préférentielle, le second pivot est en une position située à l'extérieur du conteneur (1) sur une face inférieure (1b) du conteneur (1).

Le troisième pivot (30) est apte à relier de manière pivotante la pièce de liaison (3) à la deuxième partie (2b) du vérin (2), de sorte que la pièce de liaison (3) et la deuxième partie (2b) du vérin (2) sont aptes à se déplacer en rotation l'un par rapport à l'autre autour du troisième pivot (30). Le troisième pivot (30) peut par exemple comporter une double oreille fixée sur la deuxième partie (2b) du vérin (2) et un anneau fixé sur la pièce de liaison (3), la double oreille et l'anneau étant reliés ensemble de manière pivotante par une tige les traversant.

De préférence, les axes du premier pivot (10), du deuxième pivot (20) et du troisième pivot (30) sont des axes horizontaux, parallèles entre eux et transversaux par rapport au véhicule lorsque le conteneur (1) est monté sur ledit véhicule.

La première béquille (6) peut par exemple être une barre en forme de « L », et sera de préférence en un matériau métallique tel que l'acier par exemple. La première béquille est apte à supporter la pièce de liaison (3) en une position située antérieurement au deuxième pivot (20) lorsque la pièce de liaison est reliée au conteneur par le deuxième pivot. Par « apte à supporter la pièce de liaison », il faut comprendre que la première béquille (6) est suffisamment longue pour pouvoir supporter la pièce de liaison (3) lorsque le conteneur (1) est dans une position relevée, tel qu'illustré dans la Fig. 1c. De manière préférentielle, le dispositif de désolidarisation et de dégagement comporte deux premières béquilles (6), chacune étant conçue pour supporter la pièce de liaison (3) en respectivement deux positions opposées de part et d'autre de la pièce de liaison (3), comme illustré à la Fig. 4. Le fonctionnement et les avantages découlant de ces caractéristiques apparaitront plus clairement lors de la description d'une méthode de désolidarisation et de dégagement d'un conteneur (1) selon l'invention.

Selon un mode de réalisation préférentiel de l'invention, illustré aux Figs. 2a et 2b, le dispositif de désolidarisation et de dégagement comporte en outre des premiers moyens de liaisons amovibles (40) entre la pièce de liaison (3) et/ou la seconde partie (2b) du vérin (2) d'une part et le véhicule d'autre part.

Ce premier moyen de liaison amovible (40) peut par exemple être une broche apte à s'insérer dans un orifice de la pièce de liaison (3) ou de la seconde partie (2b) du vérin (2) d'une part et dans le véhicule (de préférence dans son châssis) d'autre part, cette broche pouvant être insérée et retirée à loisir en fonction de l'utilisation souhaitée du dispositif de désolidarisation et de dégagement. Ainsi, selon ce mode de configuration, le dispositif de désolidarisation et de dégagement peut être relié au véhicule, par exemple lorsque le véhicule transporte le conteneur (1), afin d'éviter que le dispositif ne se désolidarise du véhicule.

Selon un mode de réalisation particulier de l'invention, la pièce de liaison (3) comporte un premier moyen de liaison (4) avec la première béquille (6). Ce premier moyen de liaison (4) est en une position antérieure au deuxième pivot (20). Ce premier moyen de liaison peut être une articulation, comme par exemple un pivot ou une rotule, afin de permettre à la béquille (6) et à la pièce de liaison (3) de se déplacer en rotation l'une par rapport à l'autre au niveau du premier moyen de liaison (4). Un exemple est illustré à la Fig. 6a. La pièce de liaison (3) comporte ici un orifice cylindrique (4), et une extrémité distale (6a) de la première béquille (6) présente une forme cylindrique correspondante pouvant s'enchâsser dans ledit orifice cylindrique (4), réalisant ainsi un pivot, de préférence d'axe horizontal. De préférence, on prévoira également des moyens de blocage de ladite articulation, afin de supprimer ou au moins de limiter le(s) degré(s) de liberté en rotation et/ou l'(les) amplitude(s) de rotation de l'articulation. Dans l'exemple de la Fig. 6a, ces moyens de blocage comportent par exemple un dispositif à goupille (4a).

Le premier moyen de liaison (4) peut alternativement être un moyen de liaison n'autorisant aucun degré de liberté en rotation de l'au moins première béquille (6) par rapport à la pièce de liaison (3) lorsque ladite première béquille (6) est liée à la pièce de liaison (3) par ledit premier moyen de liaison (4). A titre d'exemple, illustré à la Fig. 6b, un tel premier moyen de liaison (4) comporte un orifice de section polygonale, par exemple de section rectangulaire ou carrée, ménagé dans la pièce de liaison (3). Dans ce cas, une extrémité distale (6a) de la première béquille (6) présentera une section polygonale correspondante à celle de l'orifice de la pièce de liaison, par exemple une section rectangulaire ou carrée, de sorte que ladite extrémité distale de la première béquille (6) puisse s'enchâsser dans ledit orifice, et de sorte que, après ledit enchâssement, la première béquille ne puisse plus avoir de mouvement de rotation par rapport à la pièce de liaison (3).

Selon un mode de réalisation préférentiel, la pièce de liaison (3) comporte une première extrémité et une seconde extrémité opposée à la première extrémité, et la première extrémité est reliée de façon amovible au second pivot (20) et la deuxième extrémité est reliée au troisième pivot (30).

En mode déchargement du contenu du conteneur, il est préférable que la pièce de liaison (3) ne soit pas reliée au conteneur (1). C'est pourquoi la pièce de liaison (3) est de préférence reliée de façon amovible au conteneur (1) par le deuxième pivot (20). Par exemple, le deuxième pivot peut comprendre une tige amovible, reliant de manière pivotante d'une part une double oreille fixée sur le conteneur (1) et d'autre part un anneau fixé sur la pièce de liaison (3).

Selon un mode de réalisation préférentiel de l'invention, le dispositif de désolidarisation et de dégagement comporte au moins une seconde béquille (5), ladite seconde béquille (5) étant apte à supporter ledit conteneur (1) en une position de soutien qui est postérieure à la position du second pivot (20).

La ou les secondes béquilles (5) permettent de supporter le conteneur (1) lors de sa désolidarisation et de son dégagement d'un véhicule au niveau postérieur du conteneur (1). Une seconde béquille peut par exemple être une barre en forme de « L », le conteneur (1) présentant une encoche transversale ou longitudinale pour recevoir une branche du « L », tel qu'illustré à la Fig. 1.
De façon préférentielle, le dispositif de désolidarisation et de dégagement comporte au moins un second moyen de liaison (70) entre respectivement l'au moins une seconde béquille (5) et le conteneur (1). De préférence chaque second moyen de liaison (70) est un moyen de liaison n'autorisant aucun degré de liberté en rotation de l'au moins une seconde béquille (5) par rapport au conteneur (1) lorsque ladite seconde béquille (5) est liée au conteneur (1) par ledit second moyen de liaison (70). A titre d'exemple, illustré à la Fig. 7, un tel second moyen de liaison (70) peut comporter un orifice de section polygonale, par exemple de section rectangulaire ou carrée, ménagé dans le conteneur (50). Dans ce cas, une extrémité distale (5a) de la seconde béquille (5) présentera une section polygonale correspondante à celle de l'orifice du conteneur (1), par exemple une section rectangulaire ou carrée, de sorte que ladite extrémité distale (5a) de la seconde béquille (5) puisse s'enchâsser dans ledit orifice et qu'une rotation de la béquille après enchâssement soit impossible ou en tout cas fortement limité. Le fonctionnement et les avantages de ce mode de réalisation apparaitront plus clairement lors de la description de la méthode.

Il est à noter que la présence d'au moins une seconde béquille (5) n'est pas obligatoire, la partie postérieure du conteneur (1) pouvant être posée sur une structure existante au sol, tel qu'un quai de chargement par exemple.

De façon préférentielle, l'au moins un premier moyen de liaison (4) et/ou l'au moins un second moyen de liaison (70) sont des moyens de liaison n'autorisant aucun degré de liberté en rotation.

Selon un mode de réalisation préférentiel de l'invention, le dispositif de désolidarisation et de dégagement comprend en outre un quatrième pivot (51) apte à relier le conteneur de manière pivotante à un châssis (50) du véhicule, ledit quatrième pivot (51) étant postérieur au second pivot (20). Selon ce mode de réalisation, l'au moins une seconde béquille (5) est apte à supporter ledit conteneur (1) en une position de soutien qui est postérieure à la position du quatrième pivot (51), tel qu'illustré à la Fig. 1a par exemple.

Selon un mode de réalisation encore plus préféré de l'invention, illustré à la Fig. 3, une extrémité distale (3a) de la pièce de liaison (3) comprend un moyen de roulement (60). Un moyen de roulement (60) peut par exemple être une ou plusieurs roulettes montées à ladite extrémité distale (3a) de la pièce de liaison. Ceci permet au dispositif de rouler sur le châssis du véhicule lorsque le vérin (2) est activé. De façon alternative, c'est le deuxième pivot (20) qui est monté mobile en translation par rapport au conteneur (1). Le deuxième pivot (20) peut ainsi être par exemple placé dans une gouttière ou un rail monté longitudinalement sur le conteneur (1). Selon ce mode de réalisation, l'extrémité distale (3a) de la pièce de liaison (3) ne comprend pas de moyen de roulement (60).

L'invention concerne également un véhicule comprenant un châssis (50) et un conteneur (1) selon l'invention. De préférence, le châssis (50) du véhicule comporte une encoche apte à recevoir une extrémité (2c) de la seconde partie (2b) du vérin (2) et/ou une extrémité distale (3a) de la pièce de liaison (3). L'encoche permet au dispositif de désolidarisation et de dégagement de prendre un appui non-glissant sur le châssis lors des premières étapes de soulèvement du conteneur (1) après activation du vérin. L'encoche peut par exemple être une pièce fixée au châssis du véhicule et comprenant une concavité adaptée à recevoir une extrémité (2c) de la seconde partie (2b) du vérin (2) et/ou une extrémité distale (3a) de la pièce de liaison (3).

Selon un mode de réalisation alternatif, dont un détail est illustré à la Fig. 3, le châssis (50) du véhicule comprend une pièce mobile (60) qui est apte à recevoir une extrémité (2c) de la seconde partie (2b) du vérin (2) et/ou une extrémité distale (3a) de la pièce de liaison (3). La pièce mobile (60) est apte à se translater dans le sens longitudinal par rapport au châssis (50), permettant à l'extrémité présente de se déplacer en translation avec la pièce mobile (60). La pièce mobile (60) peut par exemple être un chariot muni de roulettes et placé sur un rail monté sur la longueur du châssis (50).

L'invention concerne également une méthode pour désolidariser et dégager un conteneur (1) d'un véhicule sur lequel ledit conteneur (1) est monté. Cette méthode comprend les étapes de :
a) Fourniture d'un véhicule sur lequel est monté un conteneur (1) selon l'invention,
b) Activation du vérin (2),
c) Désactivation du vérin (2),
d) Placement de l'au moins une première béquille (6) en soutien de la pièce de liaison (3) en une position antérieure au second pivot (20),
e) Libération de la pression du vérin (2).

L'étape a) est illustrée à la Fig. 1a. Le conteneur (1) repose sur un châssis (50) du véhicule. Le vérin (2) est relié par sa première partie (2a) au conteneur (1) par le premier pivot (10). La pièce de liaison (3) est reliée d'une part au conteneur (1) par le second pivot (20) et d'autre part à la seconde partie (2b) du vérin (2) par le troisième pivot (30). S'il est présent, le premier moyen de liaison amovible (40) est retiré afin de libérer le dispositif par rapport au châssis (50).

Les étapes b) et c) sont illustrées à la Fig. 1b). Le vérin (2) est activé, entrainant une augmentation de sa longueur. La pièce de liaison (3) tourne autour du troisième pivot (30) et autour du second pivot (20) de sorte qu'elle se place dans une position substantiellement oblique par rapport au châssis (50) du véhicule. Lorsqu'une hauteur satisfaisante est atteinte, on arrête l'activation du vérin (2), c'est-à-dire que son extension est stoppée, mais que la pression dans le vérin est maintenue afin de le maintenir en position. Notons que de façon alternative, la pièce de liaison (3) peut ne pas être présente au cours de ces étapes b) et c), et qu'elle peut être reliée d'une part au conteneur (1) par le second pivot (20) et d'autre part à la deuxième partie (2b) du vérin (2) par le troisième pivot (30) après avoir arrêté l'activation du vérin.

L'étape d) est illustrée à la Fig. 1c. Au moins une première béquille (6) est placée entre le sol et la pièce de liaison de façon à soutenir la pièce de liaison. Comme illustré, la première béquille (6) est placée antérieurement au second pivot (20). Durant cette étape, la pression dans le vérin (2) est maintenue.

L'étape e) est illustrée aux Fig. 1d et 1e. La pression dans le vérin (2) est libérée. Le vérin se contractera sous l'effet du poids du conteneur (1). En effet, le conteneur (1) est en appui sur la pièce de liaison (3) et la pièce de liaison (3) est en appui sur l'au moins une première béquille (6) qui elle-même est en appui sur le sol. Le conteneur en s'appuyant sur la pièce de liaison (3) entraine la rotation de cette dernière autour du second pivot (20). La pièce de liaison (3), étant soutenue en une position de soutien par l'au moins une première béquille (6), pivote autour de cette position de soutien. Ce mouvement de rotation entraine le déplacement du troisième pivot (30). Le vérin (2) subit alors une force de compression, et la première partie (2a) du vérin (2) et la deuxième partie (2b) du vérin (2) se rapprochent l'une par rapport à l'autre. Lorsque le dispositif est stabilisé (Fig. 1e), ni le conteneur (1) ni le dispositif de désolidarisation et de dégagement ne sont en contact avec le véhicule. Le véhicule est donc libre de partir en laissant sur place le conteneur (1) et le dispositif de désolidarisation et de dégagement, tel qu'illustré à la Fig. 1f.

La méthode peut comprendre des étapes surnuméraires. Ainsi, selon un mode préférentiel, un quatrième pivot (51) relie de manière amovible le conteneur (1) au véhicule, ledit quatrième pivot (51) étant situé de préférence en un point le plus postérieur sur lequel le conteneur (1) est en contact avec le véhicule. La méthode comprend alors en outre l'étape de :
f) libération du quatrième pivot (51) et placement d'au moins une seconde béquille (5) en soutien dudit conteneur (1) en une position postérieure au quatrième pivot (51),
ladite étape f) étant réalisée avant l'étape b).
Cette étape est illustrée à la Fig. 1a.

Lors de l'activation du vérin (2), le conteneur (1), soutenu par l'au moins une seconde béquille (5), va pivoter. Ainsi, le conteneur (1) va être dégagé du quatrième pivot (51), tel qu'illustré à la Fig. 1b.

Le dispositif peut également être utilisé pour vider le conteneur (1) de son contenu, tel qu'illustré aux Figs. 2a et 2b. Dans cette configuration, la pièce de liaison (3) n'est pas reliée au conteneur par le deuxième pivot (20). Le vérin (2) est activé, ce qui entraine un basculement du conteneur (1) autour du quatrième pivot (51), tel qu'illustré à la Fig. 2b.

L'invention concerne également une méthode pour monter un conteneur (1) selon l'invention sur un véhicule. Plus particulièrement, cette méthode concerne le montage d'un conteneur (1) selon l'invention sur un véhicule, lorsque ledit conteneur (1) est en soutien sur l'au moins une première béquille (6) et sur l'au moins une seconde béquille (5). Cette méthode est illustrée aux Figs. 1a, 1b, 1c, 1d, 1e, et 1f, les étapes de la méthode se déroulant inversement à l'ordre des figures 1a à 1f.

Cette méthode de montage comporte les étapes de :
i) Placement d'un véhicule sous le conteneur de façon à ce que ledit véhicule soit positionné pour recevoir ledit conteneur (1),
ii) Activation du vérin (2) jusqu'à ce que l'au moins une première béquille (6) ne soutienne plus la pièce de liaison (3),
iii) Désactivation du vérin (2),
iv) Enlèvement de l'au moins une première béquille (6),
v) Libération de la pression du vérin (2),
vi) Enlèvement de l'au moins une seconde béquille (5).

L'étape i) est illustrée aux Figs. 1f et 1e. Un véhicule apte à porter le conteneur (1) est placé de façon à recevoir le conteneur (1) sur des moyens pour porter ledit conteneur, par exemple un châssis (50) du véhicule.

L'étape ii) est illustrée aux Fig. 1d et 1c. Le vérin est activé, ce qui entraîne un déplacement en force de la première partie (2a) du vérin (2) par rapport à la deuxième partie (2b) du vérin (2), entrainant une augmentation de la longueur du vérin (2). L'extrémité (2c) de la première partie (2b) du vérin (2) s'approche du châssis (50). L'activation du vérin (2) est arrêtée lorsqu'une partie du dispositif est en contact avec le châssis (50) (étape iii). A ce moment, l'au moins une première béquille (6) ne soutient donc plus la pièce de liaison (3) et ladite première béquille (6) est alors retirée (étape iv)), tel qu'illustré à la Fig. 1b.

La pression dans le vérin est ensuite libérée (étape v), permettant au vérin (2) de se contracter sous le poids du conteneur jusqu'à ce que le conteneur repose sur le véhicule, tel qu'illustré à la Fig. 1a. On peut alors retirer l'au moins une seconde béquille (étape vi).

Un exemple de conteneur selon l'invention est également illustré à la Fig. 5. Dans cet exemple, l'extrémité distale antérieure (3a) de la pièce de liaison est munie de roulettes (60) d'axe horizontal. Ces roulettes sont ainsi aptes à reposer par exemple sur un rail longitudinal du châssis (50) du véhicule. Le vérin (2) est relié par une extrémité (2c) de sa deuxième partie (2b) à la pièce de liaison (3) par le troisième pivot (30). Un premier pivot (10) relie le conteneur (1) à la première partie (2a) du vérin (2).

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus. La présence de numéros de référence aux dessins ne peut être considérée comme limitative, y compris lorsque ces numéros sont indiqués dans les revendications.
L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « l'», pour introduire un élément n'exclut pas la présence d'une pluralité de ces éléments.

L'invention peut également être décrite comme suit : un conteneur (1) amovible comprenant un dispositif (2, 3, 5, 6, 10, 20, 30) de désolidarisation et de dégagement dudit conteneur (1) par rapport à un véhicule (50, 80) portant ledit conteneur, ledit dispositif restant solidaire du conteneur (1) après dépose au sol du conteneur.

## Revendications

1. Conteneur (1) apte à être monté de façon amovible sur un véhicule, ledit conteneur (1) comprenant :
- un dispositif de désolidarisation et de dégagement dudit conteneur (1) par rapport audit véhicule, ledit dispositif comprenant un vérin (2) présentant au moins une première partie (2a) et une seconde partie (2b) aptes à se déplacer en force l'une par rapport à l'autre, la première partie (2a) dudit vérin (2) étant reliée de manière pivotante audit conteneur (1) par un premier pivot (10),
- une pièce de liaison (3),
- un deuxième pivot (20) apte à relier la pièce de liaison (3) de manière pivotante au conteneur (1),
- un troisième pivot (30) apte à relier la pièce de liaison (3) de manière pivotante à la deuxième partie (2b) du vérin (2),
- au moins une première béquille (6) apte à supporter ladite pièce de liaison (3) en une position située antérieurement au deuxième pivot (20),
**caractérisé en ce que** le premier pivot (10) est en une position située à l'extérieur du conteneur et sur une surface avant (1a) dudit conteneur (1).

2. Conteneur (1) selon la revendication 1, **caractérisé en ce que** le dispositif de désolidarisation et de dégagement comporte en outre des moyens de liaison amovibles (40) entre ladite pièce de liaison (3) et/ou la seconde partie (2b) du vérin (2) d'une part et le véhicule d'autre part.

3. Conteneur (1) selon l'une quelconque des revendications précédentes, **caractérisé en ce que** le premier pivot (10) est relié de manière fixe audit conteneur (1).

4. Conteneur (1) selon l'une quelconque des revendications précédentes, **caractérisé en ce que** la pièce de liaison (3) comprend un premier moyen de liaison (4) avec l'au moins première béquille (6), ledit premier moyen de liaison (4) étant en une position antérieure au deuxième pivot (20).

5. Conteneur (1) selon la revendication 5, **caractérisé en ce que** le premier moyen de liaison (4) autorise au moins un degré de liberté en rotation de l'au moins une première béquille (6) par rapport à la pièce de liaison (3) lorsque ladite première béquille (6) est liée à la pièce de liaison (3) par ledit premier moyen de liaison (4).

6. Conteneur (1) selon l'une quelconque des revendications précédentes **caractérisé en ce que** le second pivot (20) est en une position inférieure à une surface inférieure (1b) dudit conteneur (1), et préférentiellement sur une surface inférieure (1b) dudit conteneur (1).

7. Conteneur (1) selon l'une quelconque des revendications précédentes, **caractérisé en ce que** la pièce de liaison (3) comprend une première extrémité et une seconde extrémité opposée à la première extrémité, ladite première extrémité étant reliée de façon amovible au second pivot (20) et ladite seconde extrémité étant reliée au troisième pivot (30).

8. Conteneur (1) selon l'une quelconque des revendications précédentes **caractérisé en ce que** le dispositif de désolidarisation et de dégagement comporte en outre au moins une seconde béquille (5), ladite seconde béquille (5) étant apte à supporter ledit conteneur (1) en une position de soutien qui est postérieure à la position du second pivot (20).

9. Conteneur (1) selon la revendication 8, **caractérisé en ce qu'**il comprend en outre un second moyen de liaison (70) avec l'au moins une seconde béquille (5), ledit second moyen de liaison (70) n'autorisant aucun degré de liberté en rotation de l'au moins une seconde béquille (5) par rapport au conteneur (1) lorsque ladite seconde béquille (5) est liée au conteneur (1) par ledit second moyen de liaison (70).

10. Conteneur (1) selon la revendication 8 ou 9, **caractérisé en ce que** le dispositif de désolidarisation et de dégagement comporte en outre un quatrième pivot (51) apte à relier le conteneur de manière pivotante à un châssis (50) du véhicule, ledit quatrième pivot (51) étant postérieur au second pivot (20), et **en ce que** l'au moins une seconde béquille (5) est apte à supporter ledit conteneur (1) en une position de soutien qui est postérieure à la position du quatrième pivot (51).

11. Véhicule comprenant un châssis (50) et un conteneur (1) selon l'une quelconque des revendications précédentes, ledit châssis (50) comprenant une encoche apte à recevoir une extrémité (2c) de la seconde partie (2b) du vérin (2) ou une extrémité libre (3a) de la pièce de liaison (3).

12. Véhicule comprenant un châssis (50) et un conteneur (1) selon l'une quelconque des revendications 1 à 10, ledit châssis (50) comprenant une pièce mobile (60) apte à recevoir une extrémité (2c) de la seconde partie (2b) du vérin (2) ou une extrémité libre (3a) de la pièce de liaison (3), ladite pièce mobile étant apte à se translater dans un sens longitudinal du châssis (50).

13. Méthode pour désolidariser et dégager un conteneur (1) d'un véhicule, comprenant les étapes de :
a) Fourniture d'un véhicule sur lequel un conteneur (1) selon l'une quelconque des revendications 1 à 10 est monté,
b) Activation du vérin (2),
c) Désactivation du vérin (2),
d) Placement de l'au moins une première béquille (6) en soutien de la pièce de liaison (3) en une position antérieure au second pivot (20),
e) Libération de la pression du vérin (2).

14. Méthode selon la revendication 13 dans laquelle ledit conteneur (1) fourni est un conteneur (1) selon l'une quelconque des revendications 8 à 10, le conteneur étant en relié de manière amovible au véhicule au moyen d'un quatrième pivot (51), ladite méthode comprenant en outre l'étape de
f) libération du quatrième pivot (51) et placement d'au moins une seconde béquille (5) en soutien dudit conteneur (1) en une position postérieure au quatrième pivot (51),
ladite étape f) étant réalisée avant l'étape b).

15. Méthode pour monter un conteneur (1) selon l'une quelconque des revendications 8 à 10 sur un véhicule lorsque ledit conteneur est en soutien sur l'au moins une première béquille (6) et sur l'au moins une seconde béquille (5), et comprenant les étapes de :
i) Placement du véhicule sous le conteneur de façon à ce que ledit véhicule soit positionné pour recevoir ledit conteneur (1),
ii) Activation du vérin (2) jusqu'à ce que l'au moins une première béquille (6) ne soutienne plus la pièce de liaison (3),
iii) Désactivation du vérin (2),
iv) Enlèvement de l'au moins une première béquille (6),
v) Libération de la pression du vérin (2),
vi) Enlèvement de l'au moins une seconde béquille (5)

## Patentansprüche

1. Container (1), der abnehmbar auf einem Fahrzeug montierbar ist, wobei der genannte Container (1) umfasst:
- eine Löse- und Freisetzungsvorrichtung des genannten Containers (1) im Verhältnis zu dem genannten Fahrzeug, wobei das genannte Fahrzeug einen Zylinder (2) umfasst, der wenigstens einen ersten Teil (2a) und einen zweiten Teil (2b) aufweist, die geeignet sind, sich kraftvoll im Verhältnis zueinander zu verschieben, wobei der erste Teil (2a) des genannten Zylinders (2) schwenkbar mit dem genannten Container (1) durch einen ersten Drehzapfen (10) verbunden ist,
- ein Verbindungsstück (3),
- einen zweiten Drehzapfen (20), der geeignet ist, das Verbindungsstück (3) schwenkbar mit dem Container (1) zu verbinden,
- einen dritten Drehzapfen (30), der geeignet ist, das Verbindungsstück (3) schwenkbar mit dem zweiten Teil (2b) des Zylinders (2) zu verbinden,
- wenigstens einen ersten Ständer (6), der geeignet ist, das genannte Verbindungsstück (3) in einer Position zu stützen, die vor dem zweiten Drehzapfen (20) angeordnet ist,
**dadurch gekennzeichnet, dass** der erste Drehzapfen (10) in einer Position ist, die außerhalb des Containers und auf einer vorderen Fläche (1a) des genannten Containers (1) angeordnet ist.

2. Container (1) gemäß Anspruch 1, **dadurch gekennzeichnet, dass** die Löse- und Freisetzungsvorrichtung darüber hinaus abnehmbare Mittel (40) zwischen dem genannten Verbindungsstück (3) und / oder dem zweiten Teil (2b) des Zylinders (2) einerseits und dem Fahrzeug andererseits umfasst.

3. Container (1) gemäß irgendeinem der voranstehenden Ansprüche, **dadurch gekennzeichnet, dass** der erste Drehzapfen (10) fest mit dem genannten Container (1) verbunden ist.

4. Container (1) gemäß irgendeinem der voranstehenden Ansprüche, **dadurch gekennzeichnet, dass** das Verbindungsstück (3) ein erstes Verbindungsmittel (4) mit dem wenigstens ersten Ständer (6) umfasst, wobei das erste Verbindungsmittel (4) in einer zum zweiten Drehzapfen (20) vorderen Position ist.

5. Container (1) gemäß Anspruch 5, **dadurch gekennzeichnet, dass** das erste Verbindungsmittel (4) wenigstens einen Freiheitsgrad in Rotation des wenigstens ersten Ständers (6) im Verhältnis zu dem Verbindungsstück (3) zulässt, wenn der genannte erste Ständer (6) mit dem Verbindungsstück (3) durch das genannte erste Verbindungsmittel (4) verbunden ist.

6. Container (1) gemäß irgendeinem der voranstehenden Ansprüche, **dadurch gekennzeichnet, dass** der zweite Drehzapfen (20) in einer zur unteren Fläche (1b) des genannten Containers (1) unteren Position und bevorzugt auf einer unteren Fläche (1b) des genannten Containers (1) ist.

7. Container (1) gemäß irgendeinem der voranstehenden Ansprüche, **dadurch gekennzeichnet, dass** das Verbindungsstück (3) ein erstes Ende und ein zweites Ende gegenüber dem ersten Ende umfasst, wobei das genannte erste Ende abnehmbar mit dem zweiten Drehzapfen (20) verbunden ist und das genannte zweite Ende mit dem dritten Drehzapfen (30) verbunden ist.

8. Container (1) gemäß irgendeinem der voranstehenden Ansprüche, **dadurch gekennzeichnet, dass** die Löse- und Freisetzungsvorrichtung darüber hinaus wenigstens einen zweiten Ständer (5) umfasst, wobei der genannte zweite Ständer (5) geeignet ist, den genannten Container (1) in einer Stützposition zu stützen, die hinter der Position des zweiten Drehzapfens (20) ist.

9. Container (1) gemäß Anspruch 8, **dadurch gekennzeichnet, dass** er darüber hinaus ein zweites Verbindungsmittel (70) mit dem wenigstens einen zweiten Ständer (5) umfasst, wobei das genannte zweite Verbindungsmittel (70) keinerlei Freiheitsgrad in Rotation des wenigstens einen zweiten Ständers (5) im Verhältnis zum Container (1) zulässt, wenn der genannte zweite Ständer (5) mit dem Container (1) durch das genannte zweite Verbindungsmittel (70) verbunden ist.

10. Container (1) gemäß Anspruch 8 oder 9, **dadurch gekennzeichnet, dass** die Löse- und Freisetzungsvorrichtung darüber hinaus einen vierten Drehzapfen (51) umfasst, der geeignet ist, den Container schwenkbar mit einem Fahrgestell (50) des Fahrzeugs zu verbinden, wobei der genannte vierte Drehzapfen (51) hinter dem zweiten Drehzapfen (20) ist, und dass der wenigstens eine zweite Ständer (5) geeignet ist, den genannten Container (1) in einer Stützposition zu stützen, die hinter der Position des vierten Drehzapfens (51) ist.

11. Fahrzeug, umfassend ein Fahrgestell (50) und einen Container (1) gemäß irgendeinem der voranstehenden Ansprüche, wobei das genannte Fahrgestell (50) eine Einkerbung umfasst, die geeignet ist, ein Ende (2c) des zweiten Teils (2b) des Zylinders (2) oder ein freies Ende (3a) des Verbindungsstücks (3) aufzunehmen.

12. Fahrzeug, umfassend ein Fahrgestell (50) und einen Container (1) gemäß irgendeinem der Ansprüche 1 bis 10, wobei das genannte Fahrgestell (50) ein mobiles Stück (60) umfasst, das geeignet ist, ein Ende (2c) des zweiten Teils (2d) des Zylinders (2) oder ein freies Ende (3a) des Verbindungsstücks (3) aufzunehmen, wobei das genannte mobile Stück geeignet ist, sich in einer Längsrichtung des Fahrgestells (50) zu verschieben.

13. Verfahren zum Lösen und Freisetzen eines Containers (1) eines Fahrzeugs, umfassend die Stufen:
a) Lieferung eines Fahrzeugs, auf dem ein Container (1) gemäß irgendeinem der Ansprüche 1 bis 10 montiert ist,
b) Aktivierung des Zylinders (2)
c) Deaktivierung des Zylinders (2),
d) Anbringung des wenigstens einen ersten Ständers (6) zum Stützen des Verbindungsstücks (3) in einer Position vor dem zweiten Drehzapfen (20),
e) Freisetzung des Drucks des Zylinders (2).

14. Verfahren gemäß Anspruch 13, bei dem der genannte gelieferte Container (1) ein Container (1) gemäß irgendeinem der Ansprüche 8 bis 10 ist, wobei der Container mittels eines vierten Drehzapfens (51) abnehmbar mit dem Fahrzeug verbunden ist, wobei das genannte Verfahren darüber hinaus den Schritt umfasst
f) Freisetzung des vierten Drehzapfens (51) und Anbringung des wenigstens einen zweiten Ständers (5) als Stütze des genannten Containers (1) in einer Position hinter dem vierten Drehzapfen (51),
wobei der genannte Schritt f) vor dem Schritt b) realisiert ist.

15. Verfahren zum Montieren eines Containers (1) gemäß irgendeinem der Ansprüche 8 bis 10 auf ein Fahrzeug, wenn der genannte Container auf dem wenigstens einen ersten Ständer (6) und auf dem wenigstens einen zweiten Ständer (5) aufgestützt ist und umfassend die Schritte:
i) Anbringen des Fahrzeugs unter dem Container derart, dass das genannte Fahrzeug positioniert ist, um den genannten Container (1) aufzunehmen,
ii) Aktivierung des Zylinders (2), bis der wenigstens eine erste Ständer (6) das Verbindungsstück (3) nicht mehr stützt,
iii) Deaktivierung des Zylinders (2),
iv) Entnehmen des wenigstens einen ersten Ständers (6),
v) Freisetzung des Drucks des Zylinders (2),
vi) Entnehmen des wenigstens einen zweiten Ständers (5).

## Claims

1. A container (1) designed to be mounted on a vehicle such that it can be detached, said container (1) comprising:
- a mechanism to detach and release the said container (1) from the said vehicle, the said mechanism comprising a jack (2) having at least a first part (2a) and a second part (2b) designed to forcibly move in relation to each other, the first part (2a) of the said jack (2) being connected pivotally to the said container (1) by a first pivot (10),
- a connecting part (3),
- a second pivot (20) designed to connect the connecting part (3) pivotally to the container (1),
- a third pivot (30) designed to connect the connecting part (3) pivotally to the second part (2b) of the jack (2),
- at least a first crutch (6) designed to support the said connecting part (3) in a position located anterior to the second pivot (20),
**characterised in that** the first pivot (10) is in a position located outside the container and on a front surface (1a) of the said container (1).

2. A container (1) according to claim 1, **characterised in that** the mechanism to detach and release the said container (1) from the said vehicle further comprises detachable connection means (40) between the said connecting part (3) and/or the second part (2b) of the jack (2) on the one hand and the vehicle on the other hand.

3. A container (1) according to any one of the preceding claims, **characterised in that** the first pivot (10) is fixedly connected to the said container (1).

4. A container (1) according to any one of the preceding claims, **characterised in that** the connecting part (3) comprises a first connection means (4) with the first crutch (6), the said first connection means (4) being in a position anterior to the second pivot (20).

5. A container (1) according to claim 5, **characterised in that** the first connection means (4) allows at least one degree of rotational freedom of the at least one first crutch (6) with respect to the connecting part (3) when the said first crutch (6) is connected to the connecting part (3) by the said first connection means (4).

6. A container (1) according to any one of the preceding claims, **characterised in that** the second pivot (20) is in a position below a lower surface (1b) of the said container (1), and preferably on a lower surface (1b) of the said container (1).

7. A container (1) according to any one of the preceding claims, **characterised in that** the connecting part (3) comprises a first end and a second end opposite the first end, with the said first end being connected to the second pivot (20) such that the former can be detached, and with the said second end being connected to the third pivot (30).

8. A container (1) according to any one of the preceding claims, **characterised in that** the mechanism to detach and release the said container (1) from the said vehicle further comprises at least a second crutch (5), with the said second crutch (5) being designed to support the said container (1) in a support position that is posterior to the position of the second pivot (20).

9. A container (1) according to claim 8, **characterised in that** it further comprises a second connection means (70) with the second crutch (5), with the said second connection means (70) allowing no degree of rotational freedom of the second crutch (5) with respect to the container (1) when the said second crutch (5) is connected to the container (1) by the said second connection means (70).

10. A container (1) according to claim 8 or 9, **characterised in that** the mechanism to detach and release the said container (1) from the said vehicle further comprises a fourth pivot (51) designed to connect the container pivotally to a chassis (50) of the vehicle, with the said fourth pivot (51) being posterior to the second pivot (20), and **in that** the second crutch (5) is designed to support the said container (1) in a support position that is posterior to the position of the fourth pivot (51).

11. A vehicle comprising a chassis (50) and a container (1) according to any one of the preceding claims, with the said chassis (50) comprising a notch designed to receive one end (2c) of the second part (2b) of the jack (2) or a free end (3a) of the connecting part (3).

12. A vehicle comprising a chassis (50) and a container (1) according to any one of claims 1 to 10, the said chassis (50) comprising a movable part (60) designed to receive one end (2c) of the second part (2b) of the jack (2) or a free end (3a) of the connecting part (3), the said movable part being adapted to translate according to a longitudinal direction of the chassis (50).

13. A method for detaching and releasing a container (1) from a vehicle, comprising the steps of:
a) Provision of a vehicle on which a container (1) according to any one of claims 1 to 10 is mounted,
b) Activation of the jack (2),
c) Deactivation of the jack (2),
d) Placement of the at least one first crutch (6) so as to support the connecting part (3) in a position anterior to the second pivot (20),
e) Release of the pressure on the jack (2).

14. A method according to claim 13, wherein the said provided container (1) is a container (1) according to any one of claims 8 to 10, with the container being connected, such that it can be detached, to the vehicle by means of a fourth pivot (51), the said method further comprising the step of:
f) Release of the fourth pivot (51) and placement of the at least one second crutch (5) supporting the said container (1) in a position posterior to the fourth pivot (51),
with the said step f) being carried out before step b).

15. A method for mounting a container (1) according to any one of claims 8 to 10 on a vehicle, when the said container is being supported on the at least one first crutch (6) and on the at least one second crutch (5), and comprising the steps of:
i) Placement of the vehicle under the container such that the said vehicle is positioned to receive the said container (1),
ii) Activation of the jack (2) until the at least one first crutch (6) no longer supports the connecting part (3),
iii) Deactivation of the jack (2),
iv) Removal of the at least one first crutch (6),
v) Release of the pressure on the jack (2),
vi) Removal of the at least one second crutch (5).
